# EUROPEAN PATENT SPECIFICATION

(11) **EP 1 479 236 B1**
(45) Date of publication and mention of the grant of the patent: **23.01.2008**
(21) Application number: 03742642.6
(22) Date of filing: 20.02.2003
(51) Int. Cl.: H04N 7/173, H04N 7/16, G06F 17/30

(54) **DISTRIBUTED STORAGE NETWORK ARCHITECTURE USING USER DEVICES**
SYSTEM ZUM ZUGRIFF AUF EINEN CACHE-KANAL IN JEDEM NETZKNOTEN ZUR DURCHFÜHRUNG VON BENUTZERANFORDERUNGEN UND DATEN
ARCHITECTURE DE RESEAU A MEMOIRE REPARTIE FAISANT APPEL A DES DISPOSITIFS UTILISATEURS

(30) Priority: 20.02.2002 US 81101
(43) Date of publication of application: 24.11.2004
(73) Proprietor: Koninklijke Philips Electronics N.V., 5621 BA Eindhoven (NL)
(72) Inventor: CHIU, Tom, NL-5656 AA Eindhoven (NL)
(74) Representative: Groenendaal, Antonius W. M.
(86) International application number: PCT/IB2003/000674
(87) International publication number: WO 2003/071800

(56) References cited:
- EP-A- 0 837 584
- EP-A- 0 993 163
- EP-A- 1 231 790
- WO-A-01/50755
- WO-A-01/91465
- GB-A- 2 294 132
- US-A- 5 864 854

## Description

### FIELD OF THE INVENTION

The invention relates to a system and method for enabling any rich digital media content distribution service, e.g., a broadband services such as a video-on-demand (VOD), over a data network such as the Internet.

### BACKGROUND ART

Providing a quality VOD service over the Internet network presents formidable technical and organizational challenges to potential service providers. Downloading or streaming video files over the Internet is often hampered by failures that occur more often if the number of hops that need to be passed increases. The result might be, e.g., a failing user application or a randomly and intermittently freezing video viewing experience, especially in the event of a live video broadcast. Also downloading or streaming video files over the Internet from a centrally located server might be inhibitive expensive since many customers can simultaneous download one or more files for which a huge bandwidth must be available. One method known is to download video files to a local user device (sufficient local storage space is required for this) before the user makes an actual request for it. This method intends to spread peaks in demand for the files, thereby decreasing the required bandwidth at peak demand time. Digital video files, even compressed, are considered large for this purpose. The size of a full-feature movie in MPEG 2 format, for example, can be larger than four gigabytes. Transfer of this amount of data over a DSL, cable or T1 connection may require hours and might slow down the whole network.

European patent application publication EP 1 231 790 describes a method for distributing content on demand over a cable network in which the subscribers are connected to a Central Unit in a hierarchical order of nodes, each node comprising a plurality of subscribers' clusters. The content is broadcasted at a given TV channel reaching all members of a particular cluster - only then the content is selectively accepted by the required member.

International patent application publication WO 01/50755 describes a system and a method for flexible, yet secure distribution of digital content items, optionally with an automatic payment mechanism for purchasing such content. The system supports the distribution of content to end user devices from a central distribution point, as in client-server models and variations thereof, and/or peer-to-peer distribution, for example between end user devices. In order for the distributed content to be operative, for example to be "played back" or otherwise displayed, the recipient end user device must be in communication with a network control center. The network control center then enables the recipient end user device to play back or otherwise display the received content, for example by sending a code to the recipient end user device.

### SUMMARY OF THE INVENTION

An extended period of download time increases the probability of failures in the data transfer for a variety of reasons, e.g., network congestion, malfunctioning of the source and destination hardware and/or software, etc. Data transfer over the Internet involves the sending of data packets that need to go through several routers before they reach their final destination. Each time the packet is forwarded to the next router, a hop occurs. Downloading or streaming videos over the Internet is hampered by failures that occur more frequently with the increasing number of hops per data packet. Not all data gets delivered, the receiving machine freezes up, etc. The inventor therefore proposes, among other things, a network architecture for, e.g., a nationally operating media file service operator (or generally speaking a Media Service Operator or MSO) to enable a broadband service, such as a video-on demand service, in a peer-to-peer network environment. The network uses high-speed reliable data network connections between service provider hubs or proxies, e.g., cable operator's local stations. The end-users form a peer-to-peer network community around each hub. The peer-to-peer network provides distributed storage for content downloaded from the hub that is only a few hops away. The content is stored locally using community resources and is made available to the community via a Virtual Private Web service. This service enables content look-up, content distribution, connection set-up, copyright protection, and other facilities.

The inventor proposes another novel aspect on the network architecture. In the peer-to-peer network community around each hub a first end-user's device can in effect serve a second device of a second end-user with content information. The first device is able to serve one or more end-users in its peer-to-peer network community. For example, the first end-user requests the movie called "share-it". The movie is requested from the service operator and possibly downloaded (or transferred or streamed) to the first end-user's device and stored. The service operator can keep track of content information stored on an end-user's device. The second user can also request the content to, e.g., be played out now or later or to be stored onto an optical storage carrier such as a DVD-Video disk. At a certain moment the second end-user, who is in the same peer-to-peer network as the first end-user, also makes a request for "share-it". This request is not uncommon in since typically much of the content delivered by service operator is requested repeatedly. The movie is requested again from the service operator but the service operator now initiates a transfer from the first end-user's device (e.g., a set-top-box) to the second end-user's device. Since the service operator keeps track of previously downloaded content information (and parts of it) it can determine the most cost-effective way of delivering a particular piece of content information. In this particular case the content information "share-it" is most effectively downloaded from a peer device in the peer-to-peer network. In one example, the content information that has been requested by the user can be downloaded in parts from more than on peer. In another example, in the event that one peer (from which content is being downloaded) gets disconnected the download might be taken over by another peer. In one embodiment, e.g., the service provider continuously keeps track of the whereabouts of any content information (and parts thereof) and keeps track of the progress of the download. In these and other examples, the content information "share-it" is most effectively downloaded from a peer device in the peer-to-peer network. By doing so the high-speed network between the service provider and the end-user is used more effectively and can therefore be operated at a lower cost. Consequently the end-user's device can be offered at a lower lease or purchase price, provided that the end-user agrees to share the content information over the peer-to-peer network. Also incentives can be offered to an end-user who opts to choose content information from, and that is available on, the peer-to peer network instead of from another source external to the peer-to-peer network. This approach can be made attractive by offering a lower viewing fee for a movie available on the peer-to-peer network. It is also possible that the content can now be offered at a higher quality or with additional featuring, e.g., such as found on a DVD-Video disk. The service operator will typically, but not exclusively, still enable and be responsible for content lookup, content distribution, connection setup and safeguarding, content copyright protection and other facilities. As a matter of fact, e.g., the service operator must keep track of what content information each STB has stored and that can be shared among peers on the peer-to-peer network. The peer-to-peer network might be extended to a nearby peer-to-peer network by connecting the two respective hubs and so on. It is noted that the task to keep track of which content information is where can be delegated to, e.g., the hub or a head-end station.

An EPG with data on any content information that is shared as depicted above is available to any user of the network. The EPG will be updated on a regular basis or upon a change of content information that is shared among peers forming the peer-to-peer network. The network also provides in a novel solution for digital rights management. In one embodiment the content information is scrambled and stays under the control of a conditional access manager. The EPG can contain data on conditional access of the content information. A particular piece of content information can be under the control of conditional access manager. Any user who, e.g., wants to view the content will be presented with a pay-per-view dialog screen. Subsequently the user can decide whether to pay or not. Verification of a user's account and permission can be verified either remotely, e.g., by contacting an entitlement manager, or locally, e.g., by using a CAM (Conditional Access Module). The EPG can also present the user with data on content information outside the peer-to-peer network. For example the EPG can contain data on a cable provider's content offering. A business model is envisioned whereby the end-user is offered a discount upon consuming content information that is stored already in the peer-to-peer network.

Current peer-to-peer (P2P) solutions provide low or undefined (video) quality of content, cannot guarantee a timely content delivery, and do not have proper copyright protection in place for the content. An aspect of the invention provides a scalable service, e.g., for VOD that overcomes these drawbacks. The invention also enables a business model where the VOD service can be provided inexpensively and with high quality. Low cost of the service may further deter content piracy, which is usually associated with peer-to-peer networking.

The inventor has realized that today's Media Service Operators (e.g., cable operators, satellite operators) provide consumers with access to audio/video content via broadcast as well as through a high-bandwidth network. They also define features and software for consumer set-top boxes (STBs), which include local storage (e.g., HDD), high processing power, and IP communication capabilities. Therefore, conditions exist for creation of a hybrid public/private high-bandwidth local network with scalable and efficient content storage and routing. According to an aspect of the invention, the content, e.g., digital video is received by a local network operator (head-end), preferably via a secure delivery mechanism. Then, the content and/or its parts are distributed to a plurality of STBs, or other network enabled devices with storage capability, within the local network. The content is stored on the STB and registered with a lookup service, hosted by the VOD provider. The service provider controls the storage of the content. The content can be encrypted or watermarked in order to prevent unauthorized access to ensure effective copyright management by the content provider. A user of the VOD service can select a content item (e.g., a movie) from the lookup service hosted by the provider. The lookup can be presented, for example, in a familiar electronic program guide (EPG) form. After the user selects the content for viewing, the service determines streaming or downloading options, based on the content location(s). Since the content and/or its parts are located on different STBs, the service may optimize content delivery based on the current network traffic load and/or routing patterns. For example, different chapters can be downloaded from different STBs onto a specific STB in order to overcome the asymmetrical (higher download speed than upload speed) nature of network access, e.g., a cable modem, satellite link, etc. For example, cable is an asymmetrical IP environment as its upload bandwidth is lower than download bandwidth. The download (server to client) speed is typically 100kB/sec and the upload (from client to router or server) speed is about 10kB/sec.

According to an aspect of the invention, the equipment of the end-users is made part of the content delivery and distribution system. Under control of the service or content provider, content is made accessible through a lookup service. Preferably, the user does not know, and does not need to know, the location of the source of the streamed content (hub, other end-users). Advantages reside in, among other things that the download distance is short due to the local availability, and that data traffic is restricted to a local network. The invention therefore relates to a method of enabling multiple end-users to receive content information. The content information is supplied to a hub, and a peer-to-peer network of respective devices residing at respective ones of the end-users is being used. As known, a hub is a common connection point for a cluster of devices thus forming a network. These devices are connected to the hub for the distributed storage of content information on the network, under control of the hub. The expression "enabling" refers to the parties upstream of a specific end-user, parties involved in getting the content information to the end-user.

### BRIEF DESCRIPTION OF THE DRAWING

The invention is explained below, by way of example and with reference to the accompanying drawing, wherein:
Fig. 1 is a block diagram of a service area network in the invention;
Figs.2 and 3 are block diagrams illustrating functionalities in a Service Area Network in the invention; and
Fig.4 is a block diagram for a hybrid configuration of the end-user's local storage.

Throughout the drawing, same reference numerals indicate same or corresponding features.

### DETAILED EMBODIMENTS

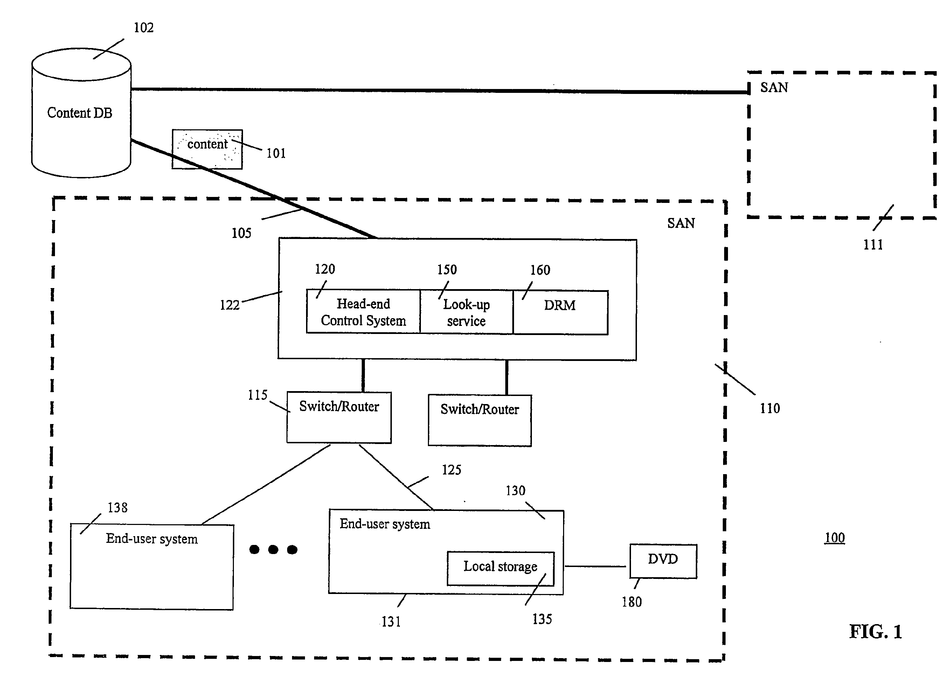

Fig.1 is a diagram of a data processing system (also referred to as data network) 100 according to the invention at the time when it is being populated with a content item 101. Content item 101 is received by a Service Area Network (SAN) 110 or 111 via a network connection 105, e.g., satellite, Internet, cable, or a physical delivery service (not shown) from an external content database 102 and routed using hub 122. Network connection 105 can be a part of various types of (sub) network topologies such as a daisy-chain topology, a start topology or a ring topology and etc. or combinations thereof A head-end control system 120 of SAN 110 selects at least one end-user system 130, tests a connection 125 and downloads content item 101 or a part of thereof to system 130 using a router 115. Preferably, Host-Intelligent dynamic routing algorithms are used in the process. The content delivered is stored by system 130 using local storage 135, e.g., a HDD. Upon completion of the content download and verification, control system 120 registers with a look-up service 150 data relating to access of the content in local storage 135 by this end-user or another end-user 138. Alternatively, content 101 is acquired by SAN 110 via a source at the end-user system, e.g., DVD player 180. In that case, a software component 131 communicates with a digital rights management (DRM) service 160 to ensure proper protection. If the content is authorized for distribution, software component 131 stores the DVD's content on local storage 135 and updates look-up service 150. If necessary, service 160 may acquire proper distribution authorization from an external source (not shown). In a similar manner, the DVD's content can be made available for further distribution within SAN 110 to other end-user systems, e.g., system 138.

A major difference between the invention and known content information processing systems, such as the Napster service, is that the user does not control the content stored on local storage 135 and received from, e.g., database 102. The user cannot move, delete or modify the content of local storage 135 without violating the integrity of the system 130. Local storage 135 is in this example, an inherent part of the local content-distribution system of SAN 110 to make possible the content delivery service through distributed storage on SAN 110. In another aspect, the quality of the content stored on local storage 135 is guaranteed by system 100, since it uses authorized sources, such as database 102, and verifies the content during and after transfer.

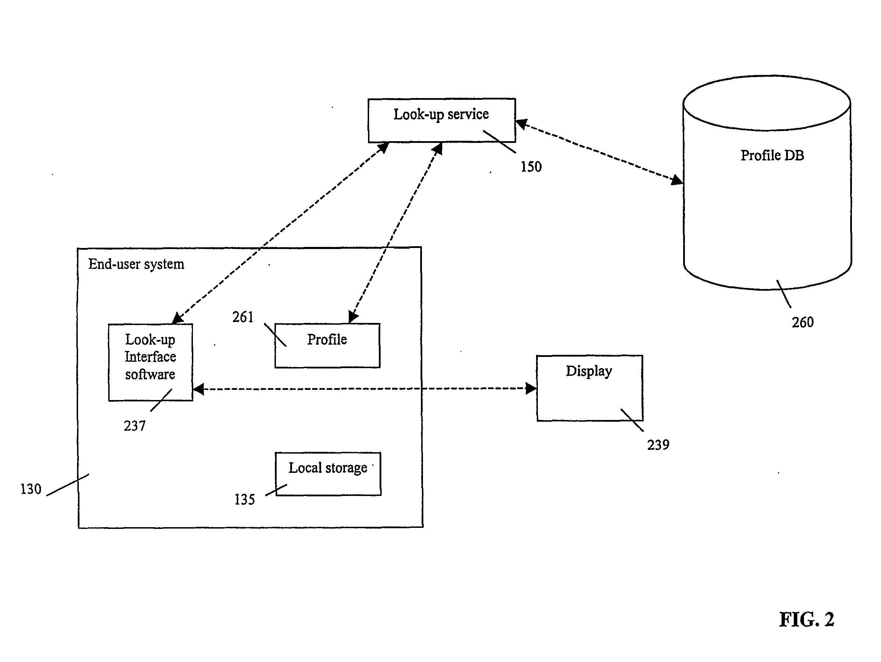

Fig. 2 is a diagram of the invention illustrating some functionalities involved when the end-user finds and selects content for play-out. A user-interface software component 237 enables the user to access look-up service 150. The contents of the look-up service can be presented via a search, browse, query, EPG (electronic program guide) or other types of interactions using, e.g., a display monitor 239 of system 130. Preferably, system 100 utilizes user-access history, e.g. a profile 261, to pre-select or recommend content available on SAN 110. The profile or parts thereof, can be stored on, e.g., user-end device 130 and/or user profile database 260. Head-end control system 120 may also determine the time slots for availability of specific content on SAN 110 based on the current and/or predicted network traffic on SAN 110. Preferably, content items with the shortest predicted delivery paths are offered/promoted first. For example, a movie that is already fully or partially stored on storage 135 or on a neighboring system 138 can be offered first.

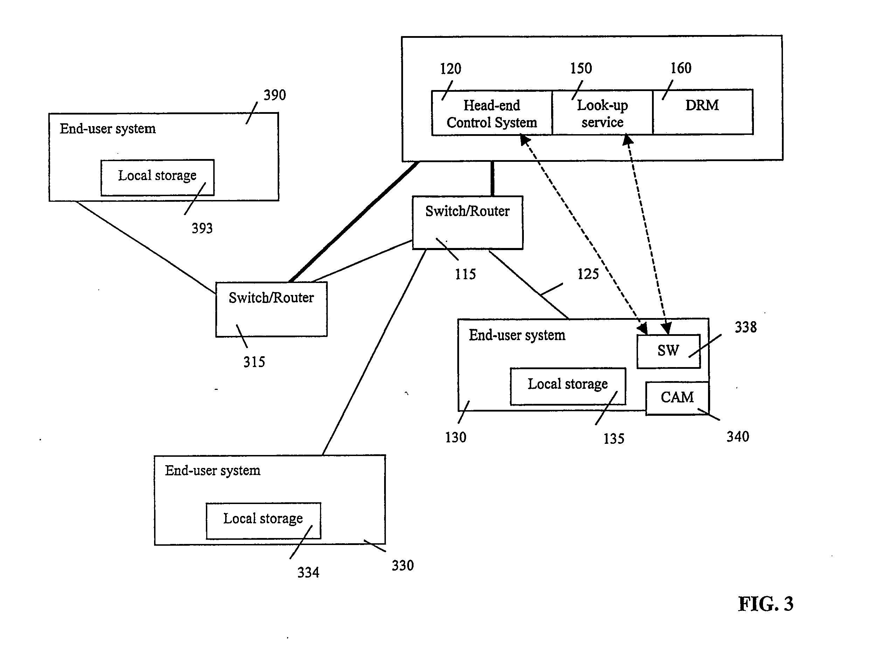

Fig. 3 is a diagram illustrating further functionalities of system 100 that get invoked when the end-user of system 130 selects a content item for direct or scheduled play-out. A software component 338 interacts with look-up service 150 to obtain information about the network location of the selected content item or its parts. Assume that a part of this content item resides at a local storage 334 of an end-user system 330 within SAN 110. Look-up service 150 provides this information to software component 338 that then initiates the downloading of this content part from end-user system 330 via switch/router 115. Digital rights management (DRM) service 160 can be used to manage conditional access rights to the content, a service located remotely to the end-user system. A local CAM (conditional access module) 340 can, at least temporarily, be given the authority to locally manage the DRM service 160 (possibly on behalf of the DRM service 160 or another, not shown, DRM service). Preferably, Router-Intelligent dynamic routing algorithms are used in the process. If the content upload/download ratio is not sufficient for play-out, control system 120 is enabled to instruct software 338 to obtain part(s) of the requested content from at least one alternative source, here local storage 393 of an end-user system 390. Software 338 is preferably enabled to mask content download latency by content already available on the local storage 135. Within this context, see, e.g., U.S. serial no. 09/433,257 (attorney docket PHA 23,782) mentioned above. Control system 120 may also be enabled to modify the upload/download bandwidth ratio at a network location closest to system 330, e.g. router 315. The content downloaded to local storage may be registered with look-up service 150 for future distribution within to other end-users in SAN 110.

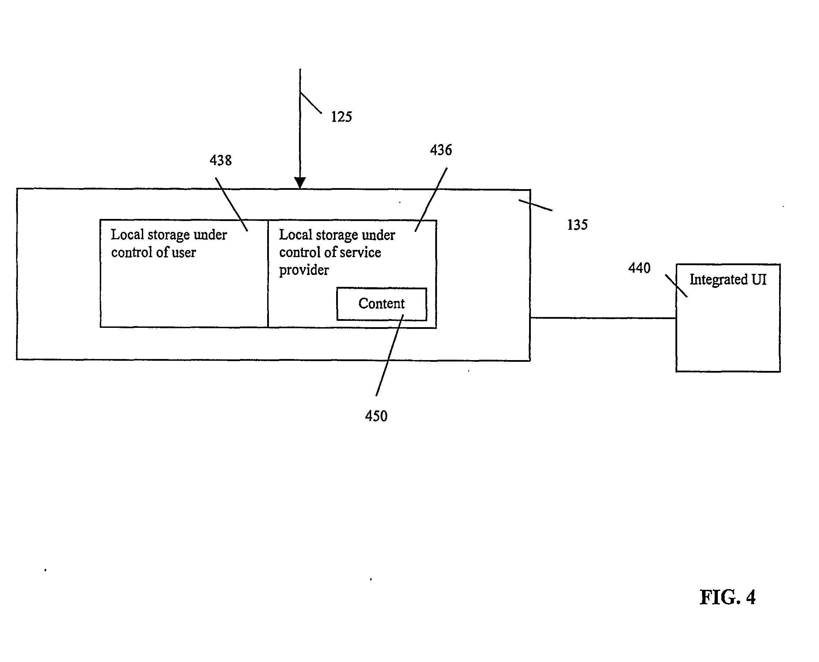

Fig.4 is a diagram illustrating a hybrid configuration of local storage 135. Local storage 135 comprises a portion 436 that is under control of the service provider or content provider, e.g., for the purpose of establishing a distributed content storage using the end-users' equipment as explained above. A part of the portion 436 is content 450. Preferably, the user of the equipment accommodating local storage 135 is not even aware of the content 450 stored locally in portion 436. Local storage also comprises a portion 438 that is under control of the user and that is not necessarily exposed to the service. Preferably, both are represented in an integrated user interface 440 if the user has access to the content in both parts.

## Claims

1. A method of distributing a digital content file (101) over a peer-to-peer data network (110, 111) comprising addressable end-user systems (130, 138, 330, 390) for sending data packets from one end-user system to another end-user system, the method comprising:
- receiving the digital content file (101) stored in a content database (102) by the data network (110, 111) under control of a hub (122);
- selecting at least a first end-user system (130, 138, 330, 390) within the data network for storing at least a part of the digital content file;
- selecting at least one router (115) and testing a network connection (125) between the at least one router and the first end-user system;
- downloading at least the part of the digital content file to the first end-user system via the at least one router;
- storing at least the part of the digital content file in a first local storage (135) of the first end-user system;
- registering look-up data at the hub, the look-up data related to storing of the digital content file within the data network;
- requesting the digital content file by a second end-user system (130);
- authorizing the second end-user system to access the digital content file by a digital rights management service (160);
- determining location of at least one required part of the digital content file within the data network in dependence on the look-up data;
- in case the at least one required part of the digital content file is stored outside a second local storage of the second end-user system, initiating by the second end-user system downloading of the at least one required part of the digital content file from a local storage (334) of at least one end-user system (330) to the second end-user system: and
- storing the at least one required part of the digital content file in the second local storage of the second end-user system, wherein all said local storages are inherent parts of the data network under control of the hub so as to prevent transfer, deletion and modification of any part of the digital content file beyond control of the hub.

2. A method as claimed in claim 1, wherein only a part of the first local storage (436) for storing the part of the digital content file (450) is under control of the hub.

3. A method as claimed in claim 1, wherein the look-up data are modified to indicate presence of the at least one required part of the digital content file at the second end-user system.

4. A method as claimed in claim 1, wherein the digital content file comprises at least video, audio or still image data.

5. A method as claimed in claim 1, comprising presenting the look-up data at the second end-user system (130) as an electronic program guide (EPG) using a display (239).

6. A method as claimed in claim 1, comprising recommending of the digital content file to a user of the second end-user system in dependence on at least the user profile data (260, 261) or the look-up data.

7. A method as claimed in claim 1, wherein the requesting the digital content file is invoked in response to selection of the digital content file for direct or scheduled playback.

8. A method as claimed in claim 1, wherein the selecting the at least one router (115) invokes host-intelligent dynamic routing algorithms.

9. A method as claimed in claim 1, wherein the receiving the digital content file comprises acquiring the digital content file from a medium (180), in particular Digital Versatile Disc, via an end-user system.

10. A digital content distribution system comprising:
- a content database (102) for storing digital content files; and
- at least one peer-to-peer data network (110, 111) in communication with the content database for receiving the digital content files;
the at least one data network comprising,
- a hub (122) for managing distribution of the digital content files,
- at least one router (115) for communicating with the hub and for delivering the digital content files, and
- addressable end-user systems (130, 138, 330, 390) for sending data packets from one end-user system to another end-user system via the at least one router; the hub comprising,
- head-end control means (120) for,
selecting the end-user systems (130, 138, 330, 390) for storing at least parts of the digital content files (101) in local storages (135, 334, 393),
testing network connections (125) between the end-user systems and the at least one router,
controlling downloading of at least the parts of the digital content files to the selected end-user systems,
controlling the local storages (135, 334, 393) of the end-user systems so as to prevent transfer, deletion and modification of any part of the digital content files beyond control of the hub, the local storages being inherent parts of the data network, and
receiving requests for the digital content files from the end-user systems;
- look-up means (150) for
registering look-up data related to storing of the digital content files in the local storages and localizing the digital content files within the data network in response to the requests from the end-user systems;
- digital right management means (160) for authorizing distribution of the digital content files to the end-user systems.

11. A system as claimed in claim 10, wherein the head-end control means (120) are for controlling only parts of the local storages (436) for storing the parts of the digital content files (450).

12. A system as claimed in claim 10, wherein the digital content files (101) comprise at least video, audio or still image data.

13. A system as claimed in claim 10, wherein the end-user systems (130) comprise displays (239) for presenting the look-up data as an electronic program guide (EPG).

14. A system as claimed in claim 10, wherein the look-up means (150) are for recommending the digital content files to users of the end-user systems in dependence on at least the users profile data (260,261) or the look-up data.

15. A system as claimed in claim 10, wherein the end-user systems (130) are for requesting a digital content file in response to selection of the digital content file for direct or scheduled playback.

16. A system as claimed in claim 10, wherein the head-end control means (120) are for selecting the at least one router (115) using host-intelligent dynamic routing algorithms.

17. A system as claimed in claim 10, wherein the head-end control means (120) are for receiving a digital content file from a medium (180), in particular Digital Versatile Disc, via an end-user system (130).

18. A system as claimed in claim 10, wherein an end-user system (130) comprises conditional access means (340) for locally authorizing distribution of the digital content files to the end-user system.

19. A method as claimed in claim 1, wherein the digital content file is protected by scrambling, encryption or watermarking.

20. A system as claimed in claim 10, wherein the digital content files are protected by scrambling, encryption or watermarking.

## Patentansprüche

1. Verfahren zum Verteilen einer digitalen Inhaltsdatei (101) über ein unmittelbares Datennetzwerk (110, 111) mit adressierbaren Endverbrauchersystemen (130, 138, 330, 390) zum Übertragen von Datenpaketen von dem einen Endverbrauchersystem zu einem anderen Endverbrauchersystem, wobei das Verfahren Folgendes umfasst:
- das Empfangen der digitalen Inhaltsdatei (101), die in einer Inhaltsdatei (102) gespeichert ist, und zwar mit Hilfe des Datennetzwerkes (110, 111) unter Ansteuerung eines Knotenpunktes (122);
- das Selektieren wenigstens eines ersten Endverbrauchersystems (130, 138, 330, 390) innerhalb des Datennetzwerkes zur Speicherung wenigstens eines Teils der digitalen Inhaltsdatei;
- das Selektieren wenigstens eines Routers (115) und das Testen einer Netzwerkverbindung (125) zwischen dem wenigstens einen Router und dem ersten Endverbrauchersystem;
- das Herunterladen wenigstens eines Teils der digitalen Inhaltsdatei in das erste Endverbrauchersystem über den wenigstens einen Router;
- das Speichern wenigstens eines Teils der digitalen Inhaltsdatei in einem ersten örtlichen Speicher (135) des ersten Endverbrauchersystems;
- das Registrieren von Nachschlagdaten beim Hub, wobei die Nachschlagdaten sich auf die Speicherung der digitalen Inhaltsdatei innerhalb des Datennetzwerkes beziehen;
- das Beantragen der digitalen Inhaltsdatei durch ein zweites Endverbrauchersystem (130);
- das Autorisieren des zweiten Endverbrauchersystems zum Zugreifen auf die digitale Inhaltsdatei durch einen digitalen Rechteverwaltungsdienst (160);
- das Ermitteln einer Stelle wenigstens eines erforderlichen Teils der digitalen Inhaltsdatei innerhalb des Datennetzwerkes in Abhängigkeit von den Nachschlagdaten;
- in dem Fall, dass der wenigstens eine erforderliche Teil der digitalen Inhaltsdatei außerhalb eines zweiten örtlichen Speichers des zweiten Endverbrauchersystems gespeichert ist, das Auslösen durch das zweite Endverbrauchersystem des wenigstens einen erforderlichen Teils der digitalen Inhaltsdatei aus einem örtlichen Speicher (334) wenigstens eines Endverbrauchersystems (330) zu dem zweiten Endverbrauchersystem; und
- das Speichern des wenigstens einen erforderlichen Teils der digitalen Inhaltsdatei in dem zweiten örtlichen Speicher des zweiten Endverbrauchersystems, wobei alle genannten örtlichen Speicher inhärente Teile des Datennetzwerkes sind, unter Ansteuerung des Hubs, um Übertragung, Löschung und Modifikation eines Teils der digitalen Inhaltsdatei hinter der Steuerung des Hubs zu vermeiden.

2. Verfahren nach Anspruch 1, wobei nur ein Teil des ersten örtlichen Speichers (436) zur Speicherung des Teils der digitalen Inhaltsdatei (450) unter Ansteuerung des Hubs steht.

3. Verfahren nach Anspruch 1, wobei die Nachschlagdaten modifiziert werden um das Vorhandensein des wenigstens einen erforderlichen Teils der digitalen Inhaltsdatei in dem zweiten Endverbrauchersystem anzugeben.

4. Verfahren nach Anspruch 1, wobei die digitale Inhaltsdatei wenigstens Video-, Audio- oder Standbilddaten enthält.

5. Verfahren nach Anspruch 1, das die Präsentation der Nachschlagdaten in dem zweiten Endverbrauchersystem (130) als einen elektronischen Programmführer (EPG) unter Verwendung einer Wiedergabeanordnung umfasst.

6. Verfahren nach Anspruch 1, das die Empfehlung der digitalen Inhaltsdatei an einen Benutzer des zweiten Endverbrauchersystems in Abhängigkeit von wenigstens den Benutzerprofildaten (260, 261) oder der Nachschlagdaten umfasst.

7. Verfahren nach Anspruch 1, wobei die Beantragung der digitalen Inhaltsdatei aufgerufen wird, und zwar in Reaktion auf die Selektion der digitalen Inhaltsdatei zur direkten oder geplanten Wiedergabe.

8. Verfahren nach Anspruch 1, wobei die Selektion des wenigstens einen Routers (115) gastgeberintelligente dynamische Leitalgorithmen aufruft.

9. Verfahren nach Anspruch 1, wobei der Empfang der digitalen Inhaltsdatei das Erwerben der digitalen Inhaltsdatei aus einem Medium (180), insbesondere von einer DVD, über ein Endverbrauchersystem umfasst.

10. Digitales Inhaltsverteilungssystem, das Folgendes umfasst:
- eine Inhaltsdatei (102) zur Speicherung digitaler Inhaltsdateien; und
- wenigstens ein direktes Datennetzwerk (110, 111) in Kommunikation mit der Inhaltsdatei zum Empfangen der digitalen Inhaltsdateien;
wobei das wenigstens eine Datennetzwerk Folgendes umfasst:
- - einen Knotenpunkt (122) zum Verwalten der Verteilung der digitalen Inhaltsdateien,
- - wenigstens einen Router (115) zur Kommunikation mit dem Knotenpunkt und zum Liefern der digitalen Inhaltsdateien, und
- - adressierbare Endverbrauchersysteme (130, 138, 330, 390) zum Übertragen von Datenpaketen von dem einen Endverbrauchersystem zu dem anderen Endverbrauchersystem über den wenigstens einen Router;
wobei der Knotenpunkt Folgendes umfasst:
- - - Kopfende-Steuermittel (120) zum
= Selektieren der Endverbrauchersysteme (130, 138, 330, 390) zur Speicherung von wenigstens Teilen der digitalen Inhaltsdateien (101) in örtlichen Speichern (135, 334, 393),
= Testen von Netzwerkverbindungen (125) zwischen den Endverbrauchersystemen und dem wenigstens einen Router,
= Steuern der Herunterladung von wenigstens Teilen der digitalen Inhaltsdateien in die selektierten Endverbrauchersysteme,
= Steuern der örtlichen Speicher (135, 334, 393) der Endverbrauchersysteme um Übertragung, Löschung und Modifikation eines Teils der digitalen Inhaltsdateien hinter der Steuerung des Knotenpunktes zu vermeiden, wobei die örtlichen Speicher inhärente Teile des Datennetzwerkes sind, und
= Empfangen von Anträgen für die digitalen Inhaltsdateien von den Endverbrauchersystemen,
- - - Nachschlagmittel (150) zum
= = Registrieren von Nachschlagdaten in Bezug auf der Speicherung der digitalen Inhaltsdateien in den örtlichen Speichern und Ortung der digitalen Inhaltsdateien innerhalb des Datennetzwerkes in Reaktion auf die Anträge von den Endverbrauchersystemen;
- - - digitale Rechteverwaltungsmittel (160) zum Autorisieren der Verteilung der digitalen Inhaltsdateien über die Endverbrauchersysteme.

11. System nach Anspruch 10, wobei die Kopfendesteuermittel (120) zur Steuerung von nur Teilen der örtlichen Speicher (436) zur Speicherung der Teile der digitalen Inhaltsdateien (450) vorgesehen sind.

12. System nach Anspruch 10, wobei die digitalen Inhaltsdateien (101) wenigstens Video-, Audio- oder Standbilddaten enthalten.

13. System nach Anspruch 10, wobei die Endverbrauchersysteme (130) Wiedergabeanordnungen (239) zum Präsentieren der Nachschlagdaten als elektronischen Programmführer (EPG) enthalten.

14. System nach Anspruch 10, wobei die Nachschlagmittel (150) zum Empfehlen der digitalen Inhaltsdaten an Benutzer der Endverbrauchersysteme in Abhängigkeit von wenigstens den Benutzerprofildaten (260, 261) oder den Nachschlagdaten.

15. System nach Anspruch 10, wobei die Endverbrauchersysteme (130) dazu vorgesehen sind, eine digitale Inhaltsdatei zu beantragen, und zwar in Reaktion auf die Selektion der digitalen Inhaltsdatei zur direkten oder geplanten Wiedergabe.

16. System nach Anspruch 10, wobei die Kopfendesteuermittel (120) vorgesehen sind zum Selektieren des wenigstens einen Routers (115), wobei gastgeberintelligente dynamische Leitalgorithmen angewandt werden.

17. System nach Anspruch 10, wobei die Kopfendemittel (120) vorgesehen sind zum Empfangen einer digitalen Inhaltsdatei von einem Medium (180), insbesondere DVD, über ein Endverbrauchersystem (130).

18. System nach Anspruch 10, wobei ein Endverbrauchersystem (130) bedingte Zugriffsmittel (340) aufweisen zur örtlichen Autorisierung der Verteilung der digitalen Inhaltsdateien über das Endverbrauchersystem.

19. Verfahren nach Anspruch 1, wobei die digitale Inhaltsdatei durch Verschlüsselung, Chiffrierung oder Wasserzeichenmarkierung geschützt ist.

20. System nach Anspruch 10, wobei die digitalen Inhaltsdateien durch Verschlüsselung, Chiffrierung oder Wasserzeichenmarkierung geschützt sind.

## Revendications

1. Procédé de distribution d'un fichier de contenu numérique (101) dans un réseau de données poste-à-poste (110, 111) comprenant des systèmes d'utilisateur final adressables (130, 138, 330, 390) pour envoyer des paquets de données d'un système d'utilisateur final à un autre système d'utilisateur final, le procédé comprenant:
- la réception du fichier de contenu numérique (101) stocké dans une base de données de contenu (102) par le réseau de données (110, 111) sous le contrôle d'un concentrateur (122);
- la sélection d'au moins un premier système d'utilisateur final (130, 138, 330, 390) dans le réseau de données pour stocker au moins une partie du fichier de contenu numérique;
- la sélection d'au moins un routeur (115) et le test d'une connexion réseau (125) entre ledit au moins un routeur et le premier système d'utilisateur final;
- le téléchargement d'au moins la partie du fichier de contenu numérique vers le premier système d'utilisateur final via ledit au moins un routeur;
- le stockage d'au moins la partie du fichier de contenu numérique dans un premier stockage local (135) du premier système d'utilisateur final;
- l'enregistrement de données de consultation dans le concentrateur, les données de consultation concernant le stockage du fichier de contenu numérique dans le réseau de données;
- la demande du fichier de contenu numérique par un deuxième système d'utilisateur final (130);
- l'autorisation d'accès du deuxième système d'utilisateur final au fichier de contenu numérique par un service de gestion de droits numériques (160);
- la détermination de l'emplacement d'au moins une partie requise du fichier de contenu numérique dans le réseau de données en fonction des données de consultation;
- au cas où ladite au moins une partie requise du fichier de contenu numérique est stockée en dehors d'un deuxième stockage local du deuxième système d'utilisateur final, le démarrage par le deuxième système d'utilisateur final d'un téléchargement de ladite au moins une partie requise du fichier de contenu numérique à partir d'un stockage local (334) d'au moins un système d'utilisateur final (330) vers le deuxième système d'utilisateur final; et
- le stockage de ladite au moins une partie requise du fichier de contenu numérique dans le deuxième stockage local du deuxième système d'utilisateur final, dans lequel tous lesdits stockages locaux font partie intégrante du réseau de données sous le contrôle du concentrateur de façon à éviter un transfert, un effacement ou une modification de toute partie du fichier de contenu numérique hors de contrôle du concentrateur.

2. Procédé selon la revendication 1, dans lequel seule une partie du premier stockage local (436) pour stocker la partie du fichier de contenu numérique (450) est sous le contrôle du concentrateur.

3. Procédé selon la revendication 1, dans lequel les données de consultation sont modifiées pour indiquer la présence de ladite au moins une partie requise du fichier de contenu numérique dans le deuxième système d'utilisateur final.

4. Procédé selon la revendication 1, dans lequel le fichier de contenu numérique comprend au moins des données vidéo, audio ou d'image fixe.

5. Procédé selon la revendication 1, comprenant la présentation des données de consultation au deuxième système d'utilisateur final (130) comme un guide de programmation électronique (EPG) en utilisant un affichage (239).

6. Procédé selon la revendication 1, comprenant la recommandation du fichier de contenu numérique à un utilisateur du deuxième système d'utilisateur final au moins en fonction des données de profil d'utilisateur (260, 261) ou des données de consultation.

7. Procédé selon la revendication 1, dans lequel la demande du fichier de contenu numérique est appelée en réponse à une sélection du fichier de contenu pour lecture directe ou programmée.

8. Procédé selon la revendication 1, dans lequel la sélection dudit au moins un routeur (115) appelle des algorithmes de routage dynamique d'hôte intelligent.

9. Procédé selon la revendication 1, dans lequel la réception du fichier de contenu numérique comprend l'acquisition du fichier de contenu numérique à partir d'un support (180), en particulier un disque polyvalent numérique, via un système d'utilisateur final.

10. Système de distribution de contenu numérique comprenant:
- une base de données de contenu (102) pour stocker des fichiers de contenu numérique; et
- au moins un réseau de données poste-à-poste (110, 111) en communication avec la base de données de contenu pour recevoir les fichiers de contenu numérique;
ledit au moins un réseau de données comprenant:
- un concentrateur (122) pour gérer la distribution des fichiers de contenu numérique,
- au moins un routeur (115) pour communiquer avec le concentrateur et pour fournir les fichiers de contenu numérique, et
- des systèmes d'utilisateur final adressables (130, 138, 330, 390) pour envoyer des paquets de données d'un système d'utilisateur final à un autre système d'utilisateur final via ledit au moins un routeur; le concentrateur comprenant:
- des moyens de commande de tête de réseau (120) pour
sélectionner les systèmes d'utilisateur final (130,138, 330, 390) pour stocker au moins des parties des fichiers de contenu numérique (101) dans des stockages locaux (135, 334, 393),
tester des connexions réseau (125) entre les systèmes d'utilisateur final et ledit au moins un routeur,
commander le téléchargement d'au moins les parties des fichiers de contenu numérique aux systèmes d'utilisateur final sélectionnés,
commander les stockages locaux (135, 334, 393) des systèmes d'utilisateur final de façon à éviter le transfert, l'effacement et la modification de toute partie des fichiers de contenu numérique hors du contrôle du concentrateur, les stockages locaux faisant partie intégrante du réseau de données, et
recevoir des demandes de fichiers de contenu numérique provenant des systèmes d'utilisateur final;
- des moyens de consultation (150) pour
enregistrer des données de consultation relatives au stockage des fichiers de contenu numérique dans les stockages locaux et localiser les fichiers de contenu numérique dans le réseau de données en réponse aux demandes provenant des systèmes d'utilisateur final;
- des moyens de gestion de droits numériques (160) pour autoriser une distribution des fichiers de contenu numérique aux systèmes d'utilisateur final.

11. Système selon la revendication 10, dans lequel les moyens de commande de tête de réseau (120) sont conçus pour commander seulement des parties des stockages locaux (436) pour stocker les parties des fichiers de contenu numérique (450).

12. Système selon la revendication 10, dans lequel les fichiers de contenu numérique (101) comprennent au moins des données vidéo, audio ou d'image fixe.

13. Système selon la revendication 10, dans lequel les systèmes d'utilisateur final (130) comprennent des affichages (239) pour présenter les données de consultation comme un guide de programmation électronique (EPG).

14. Système selon la revendication 10, dans lequel les moyens de consultation (150) sont conçus pour recommander les fichiers de contenu numérique à des utilisateurs des systèmes d'utilisateur final au moins en fonction des données de profil d'utilisateur (260, 261) ou des données de consultation.

15. Système selon la revendication 10, dans lequel les systèmes d'utilisateur final (130) sont conçus pour demander un fichier de contenu numérique en réponse à une sélection du fichier de contenu numérique pour une lecture directe ou programmée.

16. Système selon la revendication 10, dans lequel les moyens de commande de tête de réseau (120) sont conçus pour sélectionner ledit au moins un routeur (115) en utilisant des algorithmes de routage dynamique d'hôte intelligent.

17. Système selon la revendication 10, dans lequel les moyens de commande de tête de réseau (120) sont conçus pour recevoir un fichier de contenu numérique provenant d'un support (180), en particulier un disque polyvalent numérique, via un système d'utilisateur final (130).

18. Système selon la revendication 10, dans lequel un système d'utilisateur final (130) comprend des moyens d'accès conditionnel (340) pour autoriser localement la distribution des fichiers de contenu numérique vers le système d'utilisateur final.

19. Procédé selon la revendication 1, dans lequel le fichier de contenu numérique est protégé par brouillage, chiffrement ou utilisation de filigrane.

20. Système selon la revendication 10, dans lequel les fichiers de contenu numérique sont protégés par brouillage, chiffrement ou utilisation de filigrane. Légende des dessins
